# EUROPEAN PATENT APPLICATION

(11) **EP 0 568 901 A2**
(43) Date of publication of application: **10.11.1993**
(21) Application number: 93106811.8
(22) Date of filing: 27.04.1993
(51) Int. Cl.: B60R 21/32, B60R 21/16, B60R 21/22, B60R 21/28, B60T 7/12, B60N 2/42

(54) **Airbag system for a vehicle**

(30) Priority: 27.04.1992 JP 154028/92
(71) Applicant: JAPAN ELECTRONICS INDUSTRY, LTD., Ikuno-ku Osaka (JP)
(72) Inventor: Miyazaki, Nagao, c/o Japan Electronics Ind. Ltd., Ikuno-ku, Osaka (JP)
(74) Representative: Sajda, Wolf E., Dipl.-Phys.

(57) **Abstract**

An airbag system (B) suitable for multiple use for a plurality of collisions of a vehicle. One embodiment is provided with a plurality of airbag units (B1 - Bn) and is constructed such that at least one airbag unit is selectively actuated by control means (C) upon detecting a collision detection signal (S) in case of collisions. Another embodiment is provided with at least one airbag unit (B) and is constructed such that an airbag (2) is inflated by control means (C) in case of collisions and this inflated airbag is deflated by means of an inflation release means (3) after it has been actuated. Further, in an improved embodiment, an emergency brake system (E) is interlocked with an airbag unit (B). In case of collisions, an airbag (2) is inflated and the emergency brake system (E) is operated interlockingly.

## Description

### BACKGROUND OF THE INVENTION

### I. Field of the Invention

The present invention relates to an airbag system for a vehicle to prevent the accidents of vehicle occupants caused by the impact of vehicle collisions.

### II. Prior Art

Recently an airbag system has been developed and used as one of the protection systems to prevent vehicle occupants from colliding against a steering wheel or an instrument panel etc. of a vehicle by restraining vehicle occupants' forward movement caused by the inertial force of the vehicle when the vehicle collides. The airbag system is constructed such that a high-pressure gas is introduced into an airbag from a gas generator when a vehicle encounters a collision and the airbag rapidly inflates toward vehicle occupants. The airbag restrain the body of the vehicle occupant where he is sitting. A supplementary airbag system is constructed so as to inflate toward the back of a vehicle occupant's head when the vehicle encounters a collision. The supplementary airbag prevents the vehicle occupant from suffering a whiplash by regulating the backward movement of the vehicle occupant caused by the inertia of the vehicle in case of collisions.

However, in the above-mentioned prior airbag system, an airbag is immediately deflated by a degassing means once it is inflated by the vehicle collision. When the vehicle is still driven after the collision and encounters collisions again, the vehicle is defenseless for further collisions because the gas generator of the airbag system has been already used and the airbag system is inoperable.

### SUMMARY OF THE INVENTION

The present invention is developed in view of the above-mentioned problems. An object of the present invention is to provide an airbag system for a vehicle wherein an airbag can alternate inflation and deflation each time a vehicle encounters collisions.

According to the present invention, a multi type airbag system is provided with a plurality of airbag units. A control means selectively actuates one of the plurality of airbag units upon receiving a collision detection signal from a collision detection means and any one of the plurality of airbag units is inflated responsive to a plurality of collisions of a vehicle.

Further according to the present invention, a repeatedly usable airbag system is constructed such that an airbag is inflated when an airbag driving means receives a collision detection signal of a collision detection means and the inflated airbag is deflated by the operation of an inflation release means. The airbag unit alternates inflation and deflation at plural times responsive to the collision detection signal from the collision detection means and the operation of the inflation release means.

According to the present invention, the repeatedly usable airbag system is further provided with a supplementary airbag unit and a supplementary airbag driving means. The supplementary airbag unit is actuated by a signal interlocking with the collision detection signal of the collision detection means.

Further according to the present invention, the repeatedly usable airbag system is further provided with a shock absorbing means for protecting the back part of a vehicle occupant's head and a shock absorber driving means. The shock absorbing means is actuated by a signal interlocking with the collision detection signal of the collision detection means and the shock absorbing means is kept effective when the airbag unit is actuated.

Still further according to the present invention, the repeatedly usable airbag system with a supplementary airbag unit is constructed such that the inflated supplementary airbag is deflated by the operation of an inflation release means of the airbag unit or an inflation release means of the supplementary airbag unit. The supplementary airbag unit alternates inflation and deflation at plural times in response to the collision detection signal from the collision detection means and the operation of the inflation release means.

Further according to the present invention, the airbag system is further provided with an emergency brake system. An emergency brake means is interlocked with the airbag system so that the emergency brake means forces a vehicle to stop urgently by a brake driving means operated by a signal interlocking with the collision detection signal which actuates the airbag driving means.

Still further according to the present invention, airbags installed except for a driver are inflated by means of a collision detection signal from a collision detection means in case of a collision and the airbags are kept inflated until a release signal from an inflation release means is detected.

According to the present invention, following functions are expected.

In the present invention, a plurality of airbag units are provided and a control means is operated so as to selectively inflate one of the airbag units in response to a collision detection signal when a collision detection means detects the collision of a vehicle. In the same manner, unoperated airbag unit is selectively operated each time a further collision occurs. The airbag system is constructed such that a plurality of airbag units can be operated for a plurality of collisions.

In the present invention, an airbag inflates when an airbag driving means is actuated by a collision detection signal of a collision detection means and an inflated airbag is deflated by the operation of an inflation release means. The single airbag unit alternates inflation and deflation at plural times in response to the collision detection signal and the operation of the inflation release means, so that the single airbag can be repeatedly used for a plurality of collisions.

In the present invention, the repeatedly usable airbag system is further provided with a supplementary airbag unit and a supplementary airbag driving means. The main single airbag is inflated by the main airbag driving means which is actuated by the collision detection signal of the collision detection means. At the same time, a supplementary airbag driving means is also operated to inflate the supplementary airbag. Both of the inflated main airbag unit and the inflated supplementary airbag unit restrain the movement of a vehicle occupant in case of collisions.

In the present invention, the repeatedly usable airbag system is further provided with a shock absorbing means for protecting the back part of a vehicle occupant's head. The airbag unit is operated and inflated by the operation of the airbag driving means in response to the collision detection signal of the collision detection means. At the same time the shock absorbing means is actuated by the operation of a shock absorber driving means. Therefore, the movement of a vehicle occupant is restrained by both the airbags and the shock absorbing means in case of collisions.

In the present invention, a main airbag driving means of a main airbag unit and a supplementary airbag driving means of a supplementary airbag unit receive a collision detection signal of a collision detection means and operate a main airbag and a supplementary airbag. The main airbag is deflated by an inflation release means and the supplementary airbag is also deflated by an inflation release means. The airbag unit and the supplementary airbag unit alternate inflation and deflation at plural times by means of the collision detection signal and the inflation release means.

In the present invention, a main airbag and a supplementary airbag alternate inflation and deflation in response to a collision detection signal of a collision detection means and the operation of an inflation release means. Simultaneously, an emergency brake system is operated by a signal interlocking with the collision detection signal and forces a vehicle to stop urgently. The vehicle is stopped by continuous braking force until the inflation release means of the airbag unit is operated.

In the present invention the airbags for vehicle occupants except for a driver are constructed such that they are inflated by means of a collision detection signal of a collision detection means and kept inflated until a release signal of an inflation release means is detected.

### BRIEF DESCRIPTION OF THE DRAWING

Fig. 1 is a block diagram showing one embodiment of an airbag system for a vehicle according to the present invention.

Fig. 2 is a block diagram showing another embodiment of an airbag system for a vehicle according to the present invention.

Fig. 3 is a block diagram showing still another embodiment of an airbag system for a vehicle according to the present invention.

Fig. 4 is a block diagram showing a further embodiment of an airbag system for a vehicle according to the present invention.

Fig. 5 is a block diagram showing a still further embodiment of an airbag system for a vehicle according to the present invention.

### DETAILED DESCRIPTION OF A PREFERRED EMBODIMENT

A preferred embodiment of the present invention is described hereinafter referring to the attached drawings.

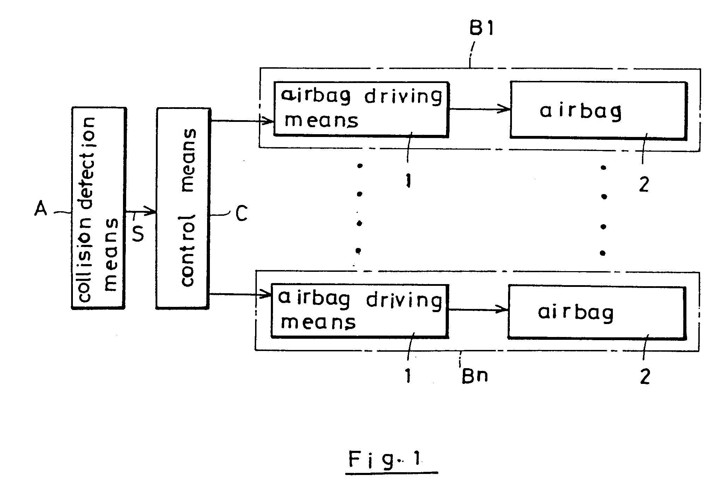

Fig. 1 shows one embodiment of a multi type airbag system for a vehicle according to the present invention as described in claim 1. The character A in the figure indicates a collision detection means for detecting a collision of a vehicle. For example, the collision detection means is comprised of a distance sensor; a distinction system comprising an operation switch which responds to a predetermined frequency range of vehicle occupants' voice, and an operation switch which responds to the change of a driver's handgrip or hand pressure; and a collision sensor for distinguishing a collision of a vehicle when three acceleration sensors provided at a center around a driver's compartment and at the front part of a vehicle body or both sides of a front panel are simultaneously operated. A collision detection signal S of the collision detection means A is selectively sent to a plurality of airbag units B1 -Bn installed in a steering wheel or an instrument panel through a control means C.

Each airbag unit B is provided with an airbag driving means 1 and an airbag 2. A signal processing circuit (not shown), such as CPU etc., of the airbag driving means 1 receives the collision detection signal and operates a gas generator (not shown). The airbag 2 is inflated by the operation of the gas generator.

According to the above-mentioned construction, when a vehicle encounters a collision (first collision), the collision detection means A detects the collision and sends the collision detection signal S to the control means C. The control means C selects one of the plurality of airbag units B1 - Bn, for example, an airbag unit B1, and operates the airbag driving means 1 of the selected airbag unit B1. The airbag 2 inflates and restrains forward-bent movement of the vehicle occupant caused by the collision, alleviating the impact caused by the collision.

When the first collision causes comparatively slight damage and has no trouble in driving the vehicle, the inflated airbag 2 is deflated by an inflation release means such as a degassing means. When the vehicle collides again after the driver resumes driving (second collision), the collision detection means A detects the collision again, and a collision detection signal S is sent to the control means C. Then, one of unoperated airbag units B2 - Bn is selected and the airbag driving means 1 of the selected airbag unit is operated by the collision detection signal S. The airbag 2 of the selected airbag unit inflates and restrains forward-bent movement of the vehicle occupant caused by the second collision, alleviating the impact of the collision.

The unoperated airbag units are selectively operated when the third, forth, or further collisions occur. Therefore, a plurality of airbag units are inflated in response to a plurality of collisions and the airbags can surely alleviate the impact of collisions each time a vehicle collides.

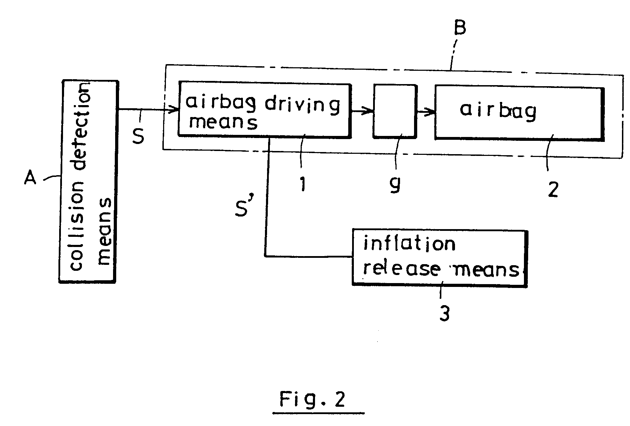

Fig. 2 is a block diagram showing the construction of one embodiment of a repeatedly usable airbag system for a vehicle according to the present invention as described in claim 2. The character A indicates a collision detection means for detecting a collision of a vehicle, comprising a distance sensor, a distinction system, and a collision sensor, as described in the explanation of Fig. 1. A collision detection signal S of the collision detection means is sent to an airbag unit B. The airbag unit B is provided with an airbag driving means 1 comprising a signal processing circuit such as CPU, a gas generation means g controlled by the airbag driving means, and is also provided with an airbag 2 which can be inflated and deflated by the gas generated from the gas generation means operated by a signal from the airbag driving means 1. The airbag driving means 1 is connected with an inflation release means 3 for releasing the inflation of the airbag 2 to deflate the airbag 2.

According to the above-mentioned construction, the collision detection means A detects the collision of a vehicle when a vehicle encounters a collision. The airbag driving means 1 of the airbag unit B is operated in response to the collision detection signal S. The gas generation means g is actuated by the airbag driving means 1, inflating the airbag 2. Consequently the body of a vehicle occupant is prevented from forwardly bending and the impact caused by the collision is alleviated.

If the collision is comparatively small one and doesn't cause trouble in driving, the airbag driving means 1 is operated in response to an inflation release signal S' by handling the inflation release means 3. By these operations, the inflated airbag 2 is deflated and the driver can resume driving.

When the vehicle collides again after he starts driving again, the collision detection means A detects the collision again. The collision detection signal S of the collision detection means A operates the airbag driving means 1 of the airbag system B again. The gas generation means g is operated again to feed gas into the deflated airbag 2 again. The airbag 2 inflates again to prevent the body of the vehicle occupant from bending forwardly and alleviate the impact of the collision.

According to this embodiment, the single airbag 2 can be inflated and deflated at plural times in response to the collision detection signal S from the collision detection means A and the release signal S' from the inflation release means 3.

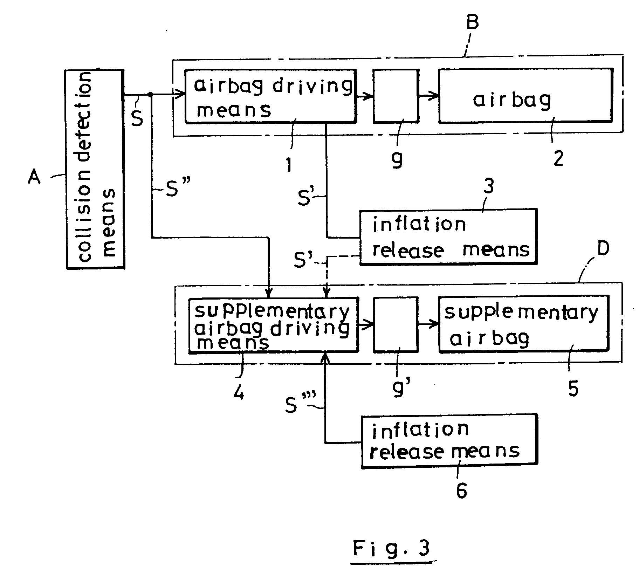

Fig. 3 is a block diagram showing the construction of one embodiment of an airbag system for a vehicle according to the present invention as described in claims 3 and 5. It is constructed such that a supplementary airbag unit D and an inflation release means thereof are further provided for the embodiment shown in Fig. 2. The same numerals and characters are used for the same parts as Fig. 2 and their explanations are omitted. The supplementary airbag unit D is provided with a supplementary airbag driving means 4, a gas generation means g', and a supplementary airbag 5. The supplementary airbag driving means 4 is operated by a signal S'' which interlocks with the collision detection signal S which operates the airbag driving means 1 of the main airbag unit B. The supplementary airbag driving means 4 operates the gas generation means g' and inflates the supplementary airbag 5 installed in the back of a vehicle occupant's seat. The supplementary airbag 5 is constructed so as to be deflated when the supplementary airbag driving means 4 receives the release signal S''' when the inflation release means 6 is operated.

According to the above-mentioned construction, a collision detection means A detects the collision of a vehicle upon the occurrence of a collision. The airbag driving means 1 of the main airbag unit B is operated by the collision detection signal S, actuates the gas generation means, and inflates the main airbag 2. The supplementary airbag driving means 4 of the supplementary airbag unit D is also operated in response to a signal S'' interlocking with the collision detection signal S. Then the gas generation means g' is operated so that the supplementary airbag 5 is inflated. The inflated main airbag 2 and the inflated supplementary airbag 5 restrain the movement of the vehicle occupant and can alleviate the impact of the vehicle's collision.

When the vehicle isn't so much damaged by the collision and is drivable, the inflation release means 3 is operated and the main airbag 2 is deflated by means of the main airbag driving means 1 which responds to the release signal S' sent from the inflation release means 3. The supplementary airbag 5 is also deflated by the operation of the supplementary airbag driving means 4 in response to the release signal S''' when the inflation release means 6 is operated, enabling the driver to restart driving.

If the vehicle collides again after he restarts driving, the collision detection means A detects the collision again, the airbag driving means 1 of the main airbag unit B and the supplementary airbag driving means 4 of the supplementary airbag unit D are operated respectively in response to the collision detection signal S. The deflated airbag 2 and the deflated supplementary airbag 5 are inflated again. The both inflated airbags 2 and 5 restrain the body of the vehicle occupant again and alleviate the impact caused by the collision of the vehicle.

If the vehicle is still drivable after the collision, the airbag driving means 1 and the supplementary airbag driving means 4 are operated to deflate the main airbag 2 and the supplementary airbag 5 in response to the release signals S' and S''' generated by operating the inflation release means 3 and 6. Then the driver can resume driving.

This embodiment can cope with a plurality of collisions of a vehicle because a single main airbag 2 and a supplementary airbag 5 repeat inflation and deflation alternately in response to the collision detection signal S from the collision detection means A and the release signals S' and S''' from the inflation release means 3 and 5.

The inflation release means 3 for the main airbag 2 and the inflation release means 6 for the supplementary airbag 5 are provided separately in this embodiment. However, the supplementary airbag 5 can be deflated by operating the supplementary airbag driving means 4 in response to the release signal S' of the inflation release means 3 of the main airbag 2 as shown in the dotted lines in the figure. In such a case the inflation release means 6 of the supplementary airbag 5 can be omitted.

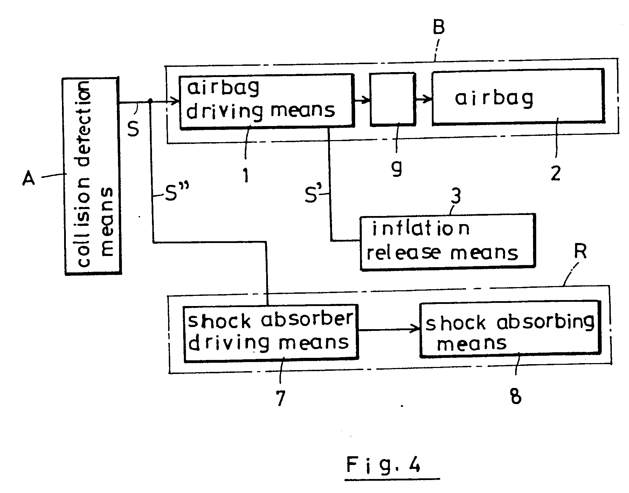

Fig. 4 is a block diagram of one embodiment of an airbag system for a vehicle according to the present invention as described in claim 4. A shock absorbing means R for protecting the back part of a vehicle occupant's head is further provided for the embodiment shown in Fig. 2. The shock absorbing means R is provided with a shock absorber 8 operated by a shock absorber driving means 7 operable in response to a signal S'' interlocking with a collision detection signal S which operates the airbag driving means 1 of the airbag unit B. A seat pillar which is constructed so as to be deformed forwardly by the operation of the shock absorber driving means 7 is used as the shock absorber 8.

According to the above-mentioned construction, the collision detection means A detects the collision of a vehicle, the airbag driving means 1 of the airbag unit B is operated in response to the collision detection signal S, the gas generation means g is operated, and the airbag 2 is inflated. The shock absorber driving means 7 of the shock absorbing means R is also operated in response to the signal S'' interlocking with the collision detection signal S and the shock absorber 8 deforms forwardly. The inflated airbag 2 restrains the forward-bent movement of the vehicle occupant and the shock absorber 8 restrains the backward movement of the vehicle occupant's head caused by the inertia of the vehicle and the instantaneous inflation of the airbag 2. Therefore, the impact caused by the collision of the vehicle can be alleviated. The shock absorber 8 is constructed so as to deform forwardly when the airbag 2 is actuated.

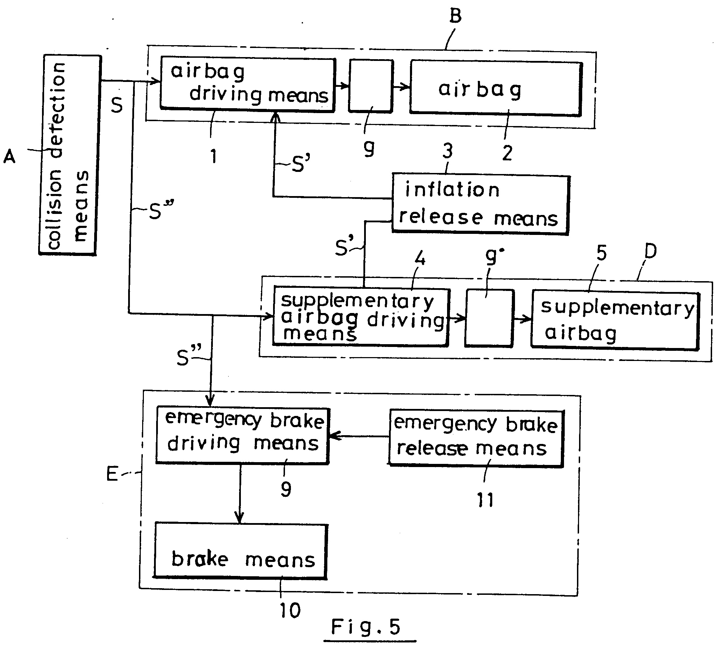

Fig. 5 is a block diagram of an airbag system for a vehicle according to the present invention as described in claim 6. An emergency brake system E is further provided for the embodiment shown in Fig. 3. The same parts as Fig. 3 have the same characters in Fig. 5 and the explanations thereof are omitted hereunder. The emergency brake system E is provided with an emergency brake driving means 9, a brake means 10, and an emergency brake release means 11. The emergency brake driving means 9 is operated by a signal S'' which interlocks with the collision detection signal S of the collision detection means A, operating the brake means 10 so that the vehicle is braked and forced to be stopped urgently. When the emergency brake release means 11 is handled, the emergency brake driving means 9 is operated in response to the release signal of the emergency brake control means 9 and the emergency brake is released.

According to the above-mentioned construction, the collision detection means A detects the collision when a vehicle collides, the airbag driving means 1 of the airbag unit B is operated by the collision detection signal S, and the airbag 2 is inflated by the operation of the gas generation means g. The supplementary airbag driving means 4 of the supplementary airbag unit D is also operated in response to a signal S'' interlocking with the collision detection signal S and the supplementary airbag 5 is also inflated by the gas generation means g'. The airbag 2 and the supplementary airbag 5 restrain the movement of the vehicle occupant in case of the vehicle's collision, and alleviate the impact of the collision. Simultaneously, the emergency brake driving means 9 of the emergency brake system E is operated by the signal S'' which interlocks with the collision detection signal S. Then the brake means 10 operates the emergency brake and stops the vehicle urgently, preventing from the accident caused by the collision of the vehicle. When the inflation release means 3 is handled, the airbag driving means 1 is operated in response to the release signal S' of the inflation release means 3 and the airbag 2 is deflated. Simultaneously the supplementary airbag 5 is also deflated by the operation of the supplementary airbag driving means 4 in response to the release signal S'. And further, the emergency brake release means 11 is handled, the emergency brake is released by the operation of the emergency brake driving means 9 in response to the release signal of the emergency brake release means 11. Consequently the driver can resume driving his car.

When the vehicle collides again after restarting driving, the collision detection means A detects the collision again, the airbag driving means 1 of the airbag unit B is operated in response to a collision detection signal S again, the gas generation means g is operated again, the gas is fed to the deflated airbag 2, and the airbag 2 is inflated again. Simultaneously, the supplementary airbag driving means 4 of the supplementary airbag unit D is also operated in response to the signal S'' interlocking with the collision detection signal S again, the gas generation means g' is operated again, the deflated supplementary airbag 5 is inflated again by the gas fed from the gas generation means g'. The re-inflated airbag 2 and the re-inflated supplementary airbag 5 restrain the movement of the vehicle occupant's body. At the same time, the emergency brake driving means 9 of the emergency brake system E is operated again in response to the signal S'' which interlocks with the collision detection signal S, the emergency brake is effected again by the operation of the brake means 10, forcing the vehicle to stop urgently. The re-inflated airbag 2 and the re-inflated supplementary airbag 5 are deflated again and the emergency brake is released by handling the inflation release means 3 and the emergency brake release means 11. Then the vehicle can be driven again. In this embodiment, the emergency brake system can be operated or released interlocking with the inflation and deflation of the airbag and the supplementary airbag each time a vehicle collides.

It should be understood that following effects are expected according to the present invention.

According to the present invention, a plurality of airbag units are selectively operated in response to a collision detection signal. Therefore, the airbags can be inflated appropriately for a plurality of collisions, enabling the airbags to alleviate the impact caused by the collisions.

Further according to the present invention, a single airbag of a single airbag unit alternates inflation and deflation in response to a collision detection signal and the operation of an inflation release means so that the airbag doesn't hinder a driver from resuming driving after the collision. The single airbag can be inflated for a plurality of collisions and can surely alleviate the impact of the collisions.

Further according to the present invention, a supplementary airbag unit is operated interlocking with the operation of a main airbag unit. The main airbag and the supplementary airbag inflate in case of a collision, restraining the vehicle occupant's body and alleviating the impact of the collision.

Still further according to the present invention, a shock absorbing means provided at the back of a vehicle occupant's head is operated interlocking with the operation of a main airbag unit. The inflated main airbag restrains the forward-bent movement of the vehicle occupant and the forwardly deformed shock absorbing means restrains the backward-bent movement of the vehicle occupant's head so that the vehicle occupant can be prevented from suffering a whiplash injury caused by the impact of the collision by means of a facilitated system.

According to the present invention, the airbag of a single airbag unit and the supplementary airbag of a supplementary airbag unit alternate inflation and deflation in response to a collision detection signal of a collision detection means and the operation of an inflation release means. The single airbag and the supplementary airbag can be inflated and deflated each time a vehicle encounters collisions without installing a plurality of airbags and a plurality of supplementary airbags. Therefore, both airbags can restrain the vehicle occupants body accurately and alleviate the impact of collision surely by a facilitated construction.

Further according to the present invention, a main airbag unit is inflated by the operation of a main airbag driving means in response to a collision detection signal, a supplementary airbag is inflated by the operation of a supplementary airbag driving means in response to a signal interlocking with the collision detection signal, and an emergency brake means is also operated to effect an emergency brake. A vehicle occupant's body can be restrained by the two inflated airbags and the vehicle is automatically and urgently stopped by the emergency brake means in case of collisions. It should be understood that the present invention has a unique character that the accident caused by the collision of the vehicle is effectively prevented. Moreover, one airbag and one supplementary airbag can alternate inflation and deflation respectively in response to the collision detection signal from the collision detection means and the operation of an inflation release means and the emergency brake is automatically operated interlocking with the airbag unit. The restraint of the vehicle occupant's body and emergency braking of the vehicle are surely effected and the safety of a vehicle is highly enhanced because the airbag and the supplementary airbag can alternate inflation and deflation and simultaneously the emergency brake alternates operation and release for each collision of a vehicle.

Still further according to the present invention, only an airbag system for a driver is constructed so as to alternate inflation and deflation and other airbag systems are constructed so as to keep inflated. Therefore, the airbag systems for a vehicle can be constructed at a low cost by installing an expensive system only for an indispensable part.

## Claims

1. A multi type airbag system suitable for multiple use for a plurality of collisions of a vehicle, comprising:
a) a plurality of airbags (1);
b) collision detection means (A) for generating a collision detection signal (S) when detecting a collision of the vehicle;
c) a plurality of airbag driving means (1) for inflating the airbags (2) respectively; and
d) control means (C) for selectively inflating at least one of the airbags (1) upon receiving the collision detection signal (S) from the collision detection means (A);
whereby the control means (C) selectively operate one of unoperated airbags to be inflated upon receiving a collision detection signal (S) from the collision detection means (A) when a next collision occurs.

2. A repeatedly usable airbag system suitable for multiple use for a plurality of collisions of a vehicle, comprising:
a) an airbag (1);
b) collision detection means (A) for generating a collision detection signal (S) when detecting a collision of the vehicle;
c) airbag driving means (1) for inflating the airbag (2); and
d) inflation release means (3) for deflating an inflated airbag;
whereby the airbag (1) alternates inflation and deflation by means of the collision detection signal (S) from the collision detection means (A) and the operation of the inflation release means (3).

3. The repeatedly usable airbag system suitable for multiple use for a plurality of collisions of a vehicle as set forth in claim 2, further comprising:
- a supplementary airbag (5); and
- a supplementary airbag driving means (4) for inflating the supplementary airbag (5);
the supplementary airbag (5) being inflated by a signal (S'') interlocking with the collision detection signal (S) generated by the collision detection means (A).

4. The repeatedly usable airbag system suitable for multiple use for a plurality of collisions of a vehicle as set forth in claim 2 or 3, further comprising:
- shock absorbing means (7) for protecting the back part of a vehicle passenger's head; and
- shock absorber driving means (8);
the shock absorbing means (7) being actuated by a signal (S'') interlocking with the collision detection signal (S) from the collision detection means (A) when an airbag unit (B) is operated.

5. The repeatedly usable airbag system suitable for multiple use for a plurality of collisions of a vehicle as set forth in claim 3 or 4, further comprising:
inflation release means (6) for a supplementary airbag unit (D);
the supplementary airbag (5) inflated by the collision being deflated by the inflation release means (3) of an airbag unit (B) or the inflation release means (6) of the supplementary airbag unit (D);
whereby the supplementary airbag (5) can alternate inflation and deflation at a plurality of times by means of the collision detection signal (S) from the collision detection means and the operation of the inflation release means (6).

6. The airbag system as set forth in claim 1, 2, 3, 4, or 5, further comprising:
- emergency brake means (10); and
- emergency brake driving means (9);
wherein the emergency brake means (10) forces a vehicle to stop urgently by actuating the emergency brake driving means (9) by a signal (S'') interlocking with the collision detection signal (S) generated by the collision detection means (A);
whereupon the emergency brake means (9) are kept effective until the inflation release signal (S') from the inflation release means (13) of the airbag (2) is detected.

7. The airbag system as set forth in claim 1, 2, 3, 4, 5 or 6,
wherein airbags installed for vehicle passengers except for a driver are inflated by the collision detection signal (S) generated by the collision detection means (A) in case of collisions of the vehicle and the airbags keep inflated until a release signal (S') from the inflation release means (3) is detected.
